# EUROPEAN PATENT APPLICATION

(11) **EP 3 047 895 A1**
(43) Date of publication of application: **27.07.2016**
(21) Application number: 15181955.4
(22) Date of filing: 21.08.2015
(51) Int. Cl.: B01D 53/14, B01D 53/22, C01B 3/50, C01B 3/52, C10L 3/10, C10G 70/04, C10G 70/06

(54) **PROCESS FOR SEPARATING A GAS FROM A GASEOUS MIXTURE BY A LIQUID ABSORBENT COMPRISING A POLYETHYLENE GLYCOL AND AN IONIC LIQUID**

(30) Priority: 21.01.2015 GB 201500990
(71) Applicant: Deng, Liyuan, 7037 Trondheim (NO)
(72) Inventor: DENG, Liyuan, 7037 Trondheim (NO); LI, Jun, 342300 Ganzhou City (CN)
(74) Representative: Gordon, Jennifer Claire

(57) **Abstract**

A process for separating at least one gas (e.g. at least one of CO₂, H₂S and/or NH₃) from a mixed gaseous feed stream, said process comprising contacting said mixed gaseous feed stream with a liquid absorbent, said liquid absorbent comprising at least one ionic liquid and at least one polyethylene glycol (PEG).

## Description

This invention relates to a process for gas capture. In particular, it relates to a process for selectively separating at least one gas from a mixed gaseous feed stream using a liquid absorbent, wherein said liquid absorbent comprises at least one ionic liquid and at least one polyethylene glycol. The invention also relates to the use of the liquid absorbent in such processes. The use of this particular liquid absorbent can intensify gas separation and reduce corrosion, energy consumption and environmental pollutions in various gas capture processes.

### Background of the Invention

The increasingly serious climate situation caused by large CO₂ emissions from fossil fuel-derived energy production has become a critical societal challenge and has caused serious public concern in recent years. As a result, innovative solutions for CO₂ capture techniques are constantly sought and widely studied.

Significant progress has been achieved from three main CO₂ capture pathways, namely post-combustion, pre-combustion and oxy-fuel. Compared to the other two approaches, pre-combustion can be more economical and less energy intensive. In pre-combustion CO₂ capture, CO₂ is removed before the fuel (e.g. H₂) is burned. An example is the separation of CO₂ from other components in syngas. This process typically involves concentrating the CO₂ at a high CO₂ partial pressure, which increases the driving force for separation and largely reduces the energy consumption for compression. The size and cost of the pre-combustion capture facilities may also be lower than for other methods. However, achieving efficient separation of CO₂/H₂ before combustion is challenging, particularly in view of the relatively high operating temperature often required.

In pre-combustion processes, CO₂/H₂ separation is an important step to purify H₂ from the water-gas shift reaction products and hence avoid CO₂ emission into the atmosphere. The selective separation of CO₂ from H₂ at elevated temperatures is the key challenge for this process because the reaction is equilibrium limited and usually only occurs at appreciable rates at pressures in the range 15-20 bar and temperatures of around 190-210°C. Thus, there are many challenges associated with the development of practical separation techniques in pre-combustion CO₂ capture, which are compatible with these conditions.

Currently, CO₂/H₂ separation from syngas is usually carried out by absorption using Selexol as absorbent. Selexol is a physical solvent, which needs to be chilled with refrigeration for effective CO₂ absorption (Selexol feed at -5°C). Often, the separation is not efficient enough to generate H₂ of sufficient purity and recovery is poor. Moreover, the sweetened gas from the Selexol process needs to be further purified, e.g. using a PSA (pressure swing adsorption) process. Therefore, a CO₂ absorbent which functions well at elevated temperature and has better CO₂ sorption capacity is desirable to have a more energy efficient and economical CO₂/H₂ separation from syngas.

In post-combustion process, absorption using the state-of-the-art amine-based solvents is currently the only available technology that can be retrofitted for existing power plants. The major aqueous amine absorbents applied in industrial processes are monoethanolamine (MEA), diethanolamine (DEA), diglycolamine (DGA), and *N*-methyldiethanolamine (MDEA) which have excellent advantages in terms of high absorption rate and CO₂ sorption capacity.

However, the aqueous amine processes usually suffer from high equipment corrosion and amine degradation at high temperatures during solvent regeneration/CO₂ desorption. The wet CO₂ corrosion could occur at the bottom of the absorber and the upper part of the regenerator due to the electrochemical corrosion of carbon steel and CO₂ in an aqueous environment. In addition, the high operation temperature and the high conductivity of the aqueous solution could cause corrosion of the amine solution at the bottom of the regenerator. Moreover, the energy consumption for solvent regeneration is high, contributing to 50-80% of the total energy consumption in an aqueous amine absorption process. In particular, the high content of water in the solvent requires large amounts of energy for regeneration, as the latent heat of water vaporization leads to the excessive energy consumption. In order to recover the lean solvent, the regeneration temperature is generally 110-125 °C, which further accelerates the corrosion and the degradation of aqueous amines.

The separation of other gases such as NH₃ from mixed gaseous feed streams is also important for both environmental and economic reasons. For example, the separation and recovery of ammonia from ammonia plant purge gas can help to improve output efficiency in the ammonia production plant. Moreover, the presence of ammonia in the purge gas is often undesirable if this gas is to be utilised further. Conventional processes for NH₃ recovery are water wash and cryogenic separation.

In view of the above-mentioned challenges it is clear that it would be desirable to develop new processes for gas capture, in particular CO₂ capture, H₂S capture and/or NH₃ capture which utilise an absorbent which overcomes some or all of these issues.

Ionic liquids (ILs) are organic salts with a negligible vapour pressure and high thermal stability. Ionic Liquids (ILs) are also well- known as green solvents for absorption of gases including CO₂, H₂S and NH₃. There are two categories of ionic liquids: physisorption ionic liquids and chemisorption ionic liquids. The gas sorption in chemisorption ionic liquids is believed to be dual mode: chemical sorption plus physical sorption, making the gas separation much more efficient and enabling the process to reach high production recovery and purity without further treatment. For example, ILs exhibit high CO₂ solubility but only negligible H₂ solubility, with CO₂/H₂ selectivities of up to 300 being reported. Ionic liquids also offer the advantage of being adaptable to specific processes and thus it is often possible to design the structure of the ionic liquids to have the desired reversible reaction with a gas under a particular set of conditions. Gas solubility in ILs shows a strong dependence on temperature and pressures, as do the viscosities of ILs.

Recently, amino-acid ionic liquids (AAILs) have been reported to be promising absorbents, particularly for CO₂, due to their excellent properties, such as high CO₂ sorption capacity, good thermal stability at high temperatures and negligible vapor pressure, and high selectivity of CO₂ over less reactive gases, e.g. H₂, CH₄ and N₂. Moreover, the relatively simple synthesis method makes the production of AAILs inexpensive and environmentally friendly with a potential for large scale production. However, the relatively high viscosity and high cost impede ILs from industrial applications. For example, ionic liquids with an alkaline group or amino acid anions usually suffer from high viscosity from 300 cP to above 1000 cP at 298 K, and their viscosity further increases after absorbing CO₂.

It is therefore desirable, and hence an object of the present invention, to develop a new, more efficient method for gas capture, in particular for CO₂, H₂S and/or NH₃ capture from a mixed gaseous feed stream, which utilises a liquid absorbent with improved properties over those currently employed. A process which offers high separation efficiency of the desired gas(es) (e.g. CO₂, H₂S and/or NH₃) from the other components in the feed stream is sought. Ideally, the process should have negligible solvent loss and offer additional benefits such as being environmentally friendly and saving energy compared to currently used methods. Ultimately, it is desired if the process is suitable for commercial applications.

The present inventors have surprisingly found that this may be achieved by utilising a liquid absorbent which comprises at least one ionic liquid and at least one polyethylene glycol (PEG). Unexpectedly, the use of this liquid absorbent intensifies gas separation and reduces corrosion, energy consumption and environmental pollutions in various gas capture processes.

### Summary of the invention

Thus, viewed from a first aspect, the invention provides a process for separating at least one gas (e.g. at least one of CO₂, H₂S and/or NH₃) from a mixed gaseous feed stream, said process comprising contacting said mixed gaseous feed stream with a liquid absorbent which comprises at least one ionic liquid and at least one polyethylene glycol.

In a further aspect, the invention provides a process for separating at least one gas (e.g. at least one of CO₂, H₂S and/or NH₃) from a mixed gaseous feed stream, said process comprising contacting said mixed gaseous feed stream with a liquid absorbent which comprises at least one ionic liquid and at least one polyethylene glycol, such that the liquid absorbent absorbs the at least one gas from the mixed gaseous feed stream to form a rich liquid absorbent.

Viewed from a further aspect, the invention provides a process for separating at least one gas (e.g. at least one of CO₂, H₂S and/or NH₃) from a mixed gaseous feed stream, said process comprising passing said mixed gaseous feed stream through a gas-liquid contactor (e.g. a membrane contactor), wherein the separation occurs *via* transport and absorption of said at least one gas into a liquid absorbent, said liquid absorbent comprising at least one ionic liquid and at least one polyethylene glycol.
Viewed from a further aspect, the invention relates to the use of a liquid absorbent comprising at least one ionic liquid and at least one polyethylene glycol for absorbing at least one gas (e.g. at least one of CO₂, H₂S and/or NH₃) from a mixed gaseous feed stream.

### Detailed Description of the Invention

The present invention describes a process for separating at least one gas (e.g. at least one of CO₂, H₂S and/or NH₃) from a mixed gaseous feed stream. The process involves contacting the mixedgaseous feed stream with a liquid absorbent comprising at least one ionic liquid and at least one polyethylene glycol.

### Gaseous Feed Stream

The mixed gaseous feed stream used in the process of the invention may be any gas stream comprising a mixture of at least two gases.

In one embodiment of the invention, the feed stream is a mixture of at least two gases, wherein one of these gases is CO₂. In this context, the process is utilised to separate the CO₂ from the gaseous feed stream, i.e. the at least one gas to be separated is CO₂. In a preferred embodiment, the feed stream comprises (e.g. consists of) hydrogen (H₂) and CO₂. In an alternative preferred embodiment, the feed stream comprises (e.g. consists of) methane (CH₄) and CO₂. In a further alternative embodiment, the feed stream comprises (e.g. consists of) nitrogen (N₂) and CO₂. In a further alternative embodiment, the feed stream comprises (e.g. consists of) methane (CH₄), hydrogen sulphide (H₂S) and CO₂ and in this embodiment the process may be used to simultaneously separate CO₂ and H₂S from the mixed gaseous feed stream.

The feed stream may comprise 5 to 90 vol%, preferably 10 to 85 vol%, more preferably 25-80 vol%, even more preferably 35-70 vol%, such as 40-60 vol% CO₂ relative to the total amount of gas present.

Typically, the feed stream will further comprise 10 to 90 vol%, preferably 25-80 vol%, more preferably 35-70 vol% H₂ relative to the total amount of gas present.

The feed stream may comprise 25 to 95 vol%, preferably 50-92 vol%, more preferably 70-90 vol% CH₄ relative to the total amount of gas present

In one particular preferred embodiment, the feed stream comprises 5 to 50 vol% CO₂ relative to the total amount of gas present (e.g. when the feed stream comprises natural gas). In an alternative preferable embodiment, the feed stream comprises 35 to 50 vol% CO₂ relative to the total amount of gas present (e.g. when the feed stream comprises biogas).

It will be appreciated that in addition to the gases mentioned above, the gaseous feed stream may comprise further gases. Examples of such further gases include hydrogen, methane, nitrogen, carbon monoxide, hydrogen sulfide, hydrogen chloride, hydrogen fluoride, ammonia, sulfur dioxide, carbonyl sulfide, oxygen and heavy hydrocarbons such as hexane, octane or decane. In all embodiments, H₂S, if present, may be present in amounts of 0.1 to 10 vol%, preferably 0.25 to 8 vol%, more preferably 0.5 to 5 vol%.

In a particularly preferred embodiment, the gaseous feed stream may comprise syngas, most preferably pre-combustion syngas, i.e. syngas which has yet to be combusted for power production. It will be understood that by "syngas" we mean a mixture comprising hydrogen and carbon monoxide in addition to carbon dioxide and other optional gases such as hydrogen sulfide.

Alternatively, in a further preferred embodiment, the gaseous feed stream may comprise biogas or natural gas, i.e. a mixture of gases comprising methane and carbon dioxide in addition to other optional gases such as carbon monoxide.

When the gaseous feed stream comprises biogas or natural gas, the process of the invention is primarily used to separate CO₂ and/or H₂S from CH₄. Natural gas is a combustible mixture formed primarily of methane, but it can also include sour gas carbon dioxide and hydrogen sulphide. The composition of natural gas can vary widely, but typically contains methane (70-90 vol%), ethane/butane (0-20 vol%), nitrogen (0-5 vol%) carbon dioxide (0-8 vol%) and hydrogen sulphide (0-5 vol%) before it is refined. CO₂ and/or H₂S in natural gas should ideally be removed (natural gas sweetening) to meet specifications in order to increase heating value (Wobbe index) and reduce corrosion of pipelines. Ideally, the CO₂ content should be reduced to < 2 vol%.

Biogas is a mixture of gases generated from anaerobic microbial digestion from organic wastes such as manure, landfill or sewage. The composition of biogas varies depending on the source. Typically biogas contains 60-65 vol% CH₄, 35-40 vol% CO₂, small amounts of hydrogen sulfide (H₂S), water vapour and traces of other gases. Depending on the source, nitrogen (N₂) may be present. The removal of carbon dioxide (CO₂) and/or hydrogen sulfide (H₂S) from biogas to a level of methane (CH₄) > 90 vol%, termed "upgrading", can not only effectively increase the Wobbe index, but also reduce corrosion caused by acid gas and therefore extend the biogas utilization as a renewable energy resource. Upgraded biogas containing at least 98 vol% of CH₄ may be compressed and liquefied for vehicle fuel or injected into a public natural gas grid.

Alternatively, in a further preferred embodiment, the gaseous feed stream comprises flue gas, i.e. a mixture of gases comprising nitrogen and carbon dioxide in addition to other optional gases such as sulphide dioxide.

In an alternative embodiment, gaseous feed stream is a mixture of at least two gases, wherein one of these gases is NH₃. In this context, the process is utilised to separate the NH₃ from the gaseous feed stream, i.e. the at least one gas to be separated is NH₃. In a preferred embodiment, the feed stream comprises (e.g. consists of) hydrogen (H₂) and NH₃.

The feed stream may comprise 0.5 to 55 vol%, preferably 0.75 to 40 vol%, more preferably 0.8 to 12 vol%, such as 1 to 4 vol% NH₃ relative to the total amount of gas present.

Typically, the feed stream will further comprise 20 to 70 vol%, preferably 40 to 68 vol%, more preferably 55-65 vol% H₂ relative to the total amount of gas present.

It will be appreciated that in this embodiment, in addition to NH₃ and H₂, the gaseous feed stream may comprise further gases. Examples of such further gases include nitrogen, methane, carbon monoxide, argon, xenon, krypton, hydrogen sulfide, hydrogen chloride, hydrogen fluoride, sulfur dioxide, carbonyl sulfide, oxygen and heavy hydrocarbons such as hexane, octane or decane.

In a preferred embodiment, the gaseous feed stream comprises ammonia plant purge gas, i.e. a mixture of gases comprising ammonia and hydrogen in addition to other optional gases such as nitrogen and methane. Ammonia plant purge gas is a combination of emission gas generated during production of ammonia (commonly a mixture of hydrogen, nitrogen and some inert gases vented to increase synthesis rate of ammonia) and storage tank gas (i.e. evaporated gases dissolved in ammonia under high pressure after depressurizing in the tank system). Approximately 180-240m³ purge gas per ton of ammonia is usually produced. The purge gas typically comprises hydrogen (20-70 vol%), nitrogen (7-25 vol%), methane (7-18 vol%), Argon(3-8 vol%), ammonia(1-55 vol%), and small percentage of krypton and xenon. An example composition of an ammonia plant purge gas is: hydrogen (55-65 vol%), nitrogen (18-23 vol%), methane (8-18 vol%), Argon(3-5 vol%), ammonia(1-4 vol%). Within storage tank gas, ammonia content may be up to 40-55 vol%.

### Absorption

The processes of the invention comprise contacting the mixed gaseous feed stream with a liquid absorbent, said liquid absorbent comprising at least one ionic liquid and at least one polyethylene glycol.

By "contacting" we mean bringing the mixed gaseous feed stream into contact, either directly or indirectly (e.g. via a membrane) with the liquid absorbent.

This contacting step typically occurs in an absorber. By "absorber", we mean an apparatus which facilitates the absorption of the at least one gas (e.g. at least one of CO₂, H₂S and/or NH₃) into the liquid absorbent. The absorber is preferably an absorption column or a membrane contactor.

The absorption column may be any suitable column known in the art such as a packed column, a tray column, a falling-film column, a bubble column, a spray tower, a gas-liquid agitated vessel, a plate column, a rotating disc contactor or a Venturi tube.

By "membrane contactor" we mean a device which achieves gas/liquid mass transfer without dispersion of one phase within another. A membrane contactor brings the gas and liquid phases into direct contact with each other, for the purpose of mass transfer between the phases, without dispersion. It will be appreciated that membrane contactors exist which achieve liquid/liquid mass transfer, however such contactors are not within the ambit of the present invention.

A membrane contactor typically comprises two regions separated by a membrane interface. One region comprises gaseous components and the other, liquid. The two regions are often referred to as the "retentate" and "permeate" sides of the membrane, wherein the "retentate" comprises those components which have not passed though the membrane and the "permeate" side comprises those components which have passed through the membrane.

When a membrane contactor is employed as the absorber in the processes of the present invention it will typically comprise a membrane and the liquid absorbent. The gaseous feed stream is passed into the membrane contactor on the retentate side, preferably *via* an inlet. The liquid absorbent is on the permeate side. The membrane contactor absorber separates the at least one gas (e.g. at least one of CO₂, H₂S and/or NH₃) from the gaseous feed stream. This is achieved by selective absorption of the gas(es) (e.g. at least one of CO₂, H₂S and/or NH₃) into the liquid absorbent. The remaining components of the gaseous feed stream pass out of the membrane contactor on the retentate side, preferably *via* an outlet. Some or all of these remaining components may be recycled back to the inlet for further separations. The liquid absorbent comprising absorbed gas (e.g. at least one of CO₂, H₂S and/or NH₃) is passed out of the membrane contactor absorber, typically to a desorber. The liquid absorbent comprising the absorbed at least one gas from the first membrane contactor may be referred to as the "rich" liquid absorbent.

The membrane contactor absorber is usually configured such that the gaseous feed stream flows in the opposite direction to the liquid absorbent, i.e. the gaseous feed stream flows in a counter-current direction to the flow of the liquid absorbent. This helps to maximise absorption. The direction of flow of the liquid absorbent may also be co-current or cross-flow, depending on the process conditions.

The absorber is operated at a first pressure. The first pressure will be understood to be one which is appropriate for the desired absorption of gas(es) (e.g. at least one of CO₂, H₂S and/or NH₃) into the liquid absorbent. The pressure may be at least 5 bar, preferably at least 10 bar, more preferably at least 20 bar. In some embodiments the pressure will be not more than 120 bar, preferably not more than 100 bar, more preferably not more than 80 bar. The temperature of the absorber may be in the range 25 to 300 °C, preferably 30 to 180 °C, such as 40 to 80 °C, e.g. 50 to 60 °C.

### Desorber

The processes of the invention may comprise an additional step subsequent to the contacting step in which the liquid absorbent containing the absorbed at least one gas is fed to a desorber. The purpose of the desorber is to desorb the at least one gas from the liquid absorbent.

By "desorber", we mean an apparatus which facilitates the desorption (stripping) of the at least one gas (e.g. at least one of CO₂, H₂S and/or NH₃) from the liquid absorbent. The desorber may be any suitable device known in the art such as trayed towers (plate columns), packed columns, spray towers, bubble columns, centrifugal contactors or membrane contactors. The desorber may also be one or more flash tanks.

When a membrane contactor is employed as the desorber it typically comprises a membrane. If the absorber is also a membrane contactor, the membrane used in the desorber may be the same or different from the membrane used in the absorber. The (rich) liquid absorbent comprising absorbed gas(es) (e.g. at least one of CO₂, H₂S and/or NH₃) is fed into the membrane contactor desorber on the retentate side, preferably *via* an inlet. The purpose of the membrane contactor desorber is to desorb the gas(es) (e.g. at least one of CO₂, H₂S and/or NH₃) from the liquid absorbent. The gas(es) (e.g. at least one of CO₂, H₂S and/or NH₃) desorbs from the liquid absorbent and passes through the membrane to the permeate side. The at least one gas (e.g. at least one of CO₂, H₂S and/or NH₃) will then typically be recovered from the permeate side of the membrane contactor desorber. The liquid absorbent flows out of the membrane contactor desorber on the retentate side, preferably *via* an outlet, and will typically be recycled back to the absorber for further use as an absorbent.

The desorber, if present, is operated at a second pressure. The second pressure will be understood to be one which is appropriate for the desired desorption of the at least one gas (e.g. at least one of CO₂, H₂S and/or NH₃) from the liquid absorbent. The pressure may be at least 1 bar, preferably at least 2 bar, more preferably at least 3 bar. In some embodiments the pressure will be not more than 10 bar, preferably not more than 8 bar, more preferably not more than 5 bar. The temperature of the desorber may be in the range 25 to 300 °C, preferably 30 to 180 °C, such as 40 to 150 °C, e.g. 50 to 140 °C.

Typically, the pressure of the desorber is different to that of the absorber. Thus, the process may be considered a pressure swing process. In all embodiments, it is preferred if the pressure of the desorber is less than that of the absorber, i.e. the second pressure is lower than the first pressure. Typically, the second pressure is at least 5 bar, preferably at least 10 bar lower than the first pressure.

If a membrane contactor is employed as the absorber and/or the desorber it is preferable if, in one or both the membrane contactors, there is no difference between the pressures on each side of the membrane, thus the pressure on the retentate side is the same as (balanced with) that on the permeate side. This helps to avoid pore wetting and bubbling. As a result, many different types of membranes and membrane modules known in the art may be suitable for use in the present invention.

In an alternative embodiment, the pressure on the retentate (gas) side of the membrane contactor absorber may be higher or lower than that on the permeate (liquid) side, e.g. with a trans-membrane pressure difference of less than 3bar, preferably less than 2bar, for example less than 1bar, when liquid side pressure is higher, or less than 8bar, preferably less than 5bar, for example less than 3bar, when gas side pressure is higher.

In a further embodiment, the pressure on the retentate (liquid) side of the membrane contactor desorber may be slightly higher than the permeate (gas) side, e.g. with a trans-membrane pressure difference of less than 3bar, preferably less than 2bar, for example less than 1bar.

In embodiments of the invention wherein the pressure on the retentate side of the membrane contactor absorber is different to that on the permeate side of the membrane contactor absorber, the first pressure is defined to be the pressure on the permeate side (i.e. the liquid side).

In embodiments of the invention wherein the pressure on the retentate side of the membrane contactor desorber is different to that on the permeate side of the membrane contactor desorber, the second pressure is defined to be the pressure on the retentate side (i.e. the liquid side).

It will be appreciated that the exact transmembrane pressure difference utilised may be dependent on the properties of absorbent and membrane materials, such as surface tension and contact angle, as well as on the pore size and pore size distribution of the membrane, if a porous membrane is used. This has the advantage of helping to avoid wetting of the membrane, which occurs when absorbent molecules diffuse into the membrane, resulting in an increase in mass transfer resistance and undesirable swelling of the membrane material.

Issues relating to bubbling have a less significant impact upon the separation, compared to wetting, and by controlling the pressure difference, only a very small amount of bubbles can occur. Moreover, bubbling may be compensated for by adding an extra gas-liquid separator between the membrane contactor absorber and desorber to stabilize the gas-rich liquid absorbent stream. In such a separator, the at least one gas (e.g. at least one of CO₂, H₂S and/or NH₃) in the bubbles will be further absorbed into the liquid absorbent and other less soluble gases (e.g. H₂ or CH₄) will remain in gas phase and be released and collected as product.

If the absorber and/or the desorber is a membrane contactor, any suitable membrane can be used therein provided it enables the necessary mass transfer at the interface between the gas and liquid phases. The membrane may be porous or non-porous, typically porous. By "porous" we mean that the membrane contains pores. The pores are typically micropores, having a diameter of 2 nm or less, or mesopores, having a diameter of 2 to 100 nm. Preferably, the membrane contains mesopores. In a particularly preferred embodiment, the pores of the membrane have a diameter in the range 2-100 nm, such as 40 to 60 nm.

It is preferred if the membrane has a sharp or narrow pore size distribution, for example, at least more than 80% of the pores have the size 40-60nm, less than 10% of the pores have a size more than 60nm or less than 40nm, and less than 1% of the pores have a size more than 1µm or less than 10nm.

The membrane will also usually be hydrophobic, e.g. when hydrophilic absorbents are used.

Highly gas permeable non-porous membranes may also be used.

For a non-porous membrane, the non-porous layer of the membrane will preferably have a thickness of 1 to 2000 nm, more preferably 10-1000 nm, even more preferably 25-500 nm.

For a porous membrane, the membrane will preferably have a thickness of 1-500µm, more preferably 10-300µm, even more preferably 25-200µm.

Typically, the membrane will have a packing density of 300 to 30000 m²/m³, preferably 1500 to 3000 m²/m³.

Many different types of membranes known in the art would be suitable for use in the present invention. Example membranes thus include ceramic membranes and porous glass membranes with modified hydrophobic surface and hydrophobic polymeric membranes, e.g. polypropylene (PP), polyethylene (PE), polycarbonate (PCTE), polyetetrafluoroethylene (PTFE) and polyvinylidene fluoride (PVDF), as well as other hydrophobic fluromembranes.

In all embodiments, the membrane is preferably non-selective for the at least one gas to be separated (e.g. at least one of CO₂, H₂S and/or NH₃). By "non-selective" we mean that the membrane does not allow only one gas to pass through it, but rather permits the passage of many different types of molecules. This has the advantage that the membranes have lower mass transfer resistance, and the membranes are generally cheaper than the more traditionally used selective membranes which are chosen to selectively allow the passage of only a single gas, e.g. only CO₂ or NH₃.

The absorber and desorber are typically arranged in a loop arrangement so as to provide a continuous process. Thus, the liquid absorbent flows between the absorber and desorber in a closed cycle process. There will usually be a means of adjusting the pressure between each contactor, such as a pressure valve or a flash tank.

### Liquid Absorbent

The liquid absorbent used in the processes of the invention comprises (e.g. consists of) at least one ionic liquid and at least one polyethylene glycol. The absorbent will typically have sorption capacity for the at least one gas to be separated (e.g. at least one of CO₂, H₂S and/or NH₃), be able to selectively absorb the at least one gas (e.g. at least one of CO₂, H₂S and/or NH₃) in the presence of other gases, such as CH₄ and/or H₂, and have negligible vapour pressure. By "negligible vapour pressure" we mean the vapour pressure is typically less than 1 Pa at room temperature.

In order to be suitable for use in the processes of the invention the liquid absorbent should ideally be capable of selectively dissolving the at least one gas to be separated (e.g. at least one of CO₂, H₂S and/or NH₃). Preferably, it is also capable of a reversible reaction with this gas(es), i.e. it is able to absorb the at least one gas (e.g. at least one of CO₂, H₂S and/or NH₃) under one set of conditions and desorb it under a second set of conditions. It is also desirable if the liquid absorbent is thermally stable at the temperatures employed in the process, chemically stable and selective for absorption of the at least one gas (e.g. at least one of CO₂, H₂S and/or NH₃) over other components in the mixed gaseous feed stream, such as H₂. Ideally, it should also have a low viscosity and low corrosion. In order to maximise the efficiency of the process, the liquid should have a high capacity for the at least one gas (e.g. at least one of CO₂, H₂S and/or NH₃) and a favourable stripping rate.

Ionic liquids are attractive not only because they satisfy many of the above-mentioned criteria, but also because the range available means that they have designable properties which can be tuned by adjusting the structure and species of the anions and/or cations involved.

The liquid absorbent comprises at least one ionic liquid. Whilst it is within the ambit of the invention for the liquid absorbent to comprise more than one ionic liquid (e.g. a mixture of two or more ionic liquids) it is preferable if the liquid absorbent comprises only one ionic liquid.

The ability of ionic liquids to absorb CO₂, H₂S and NH₃ is known. There are two categories of ionic liquids: physisorption ionic liquids and chemisorption ionic liquids. The CO₂ sorption in chemisorption ionic liquids is thought to be the result of a combination of chemisorption and physisorption processes. This dual mechanism leads to a high absorption efficiency.

An "ionic liquid" within the context of the invention is an organic salt in the liquid state which stays as a liquid over a wide temperature range (e.g. -96 °C to 300 °C). This property may be due to the large size and asymmetry of the cation combined with resonance stabilized anions. Well known as "green" solvents, ionic liquids are promising absorbents for CO₂, H₂S and NH₃ due to their excellent properties, such as high sorption capacity of selected gases, good thermal stability at high temperatures and negligible vapor pressure. One attractive feature of ILs is that their properties can be adjusted via chemical alteration of the cation and/or anion. In addition, many ILs are liquids with high coulombic forces constraining the IL constituents. Thus, the ILs exert practically no vapour pressure above the liquid surface. Moreover, the cation and/or anion can be functionalized, and the physical/chemical properties such as density, viscosity, hydrophobicity, and chemical affinity can be 'tuned' and targeted to a wide range of applications.

ILs normally show higher viscosity than aqueous solutions, which is a drawback in conventional absorption process. It is preferable if the ionic liquid(s) have relatively low viscosity (e.g. in the range of less than 50mPa.s at the operating conditions). Alternatively, co-solvents may be added to reduce the overall viscosity of the ionic liquid absorbent.

The at least one ionic liquid used in the processes of the present invention may be chosen from any suitable ionic liquid known in the art, and is preferably a chemisorption ionic liquid. It will be appreciated that the ionic liquid comprises an organic salt. The organic salt comprises a cation and an anion.

Examples of cations include imidazolium, quaternary ammonium phosphonium, alkanolamine, polyamine or pyridinium cations, such as 1-butyl-3-methylimidazolium, 1-allyl-3-methylimidazolium, 1,3-dimethylimidazolium, 1-ethyl-3-methylimidazolium, 1-octyl-3-methylimidazolium, 1-hexyl-3-methylimidazolium, 1-pentyl-3-methylimidazolium, butyl-trimethylammonium, 2-methylpyridinium , 1-propylamide-3-butyl imidazolium, , triethylene tetramine, diethylene triamine and trihexyl(tetradecyl)phosphonium.

The anion is thought to play a key role in determining the gas (e.g. CO₂) solubility of the ionic liquid. Examples of anions include nitrate, iodide, chloride, bromide, tetracyanoborate, dicyanamide, bis(fluorosulfonyl)imide, bistrifluoromethanesulfonylimide, tricyanomethanide, tetrafluoroborate, hexafluorophosphate, trifluoromethan sulfonate and bis(trifluoromethylsulfonyl)imide 1-α-aminopropionic acid, aminoethanoic acid, prolinate or imidazole.

In one preferable embodiment, the cation is an imidazolium cation and the anion is selected from the group consisting of hexafluorophosphate, chloride, bis(trifluoromethylsulfonyl)imide, tricyanomethanide and tetrafluoroborate.

In a more preferable embodiment, the cation is an imidazolium cation and the anion is selected from the group consisting of hexafluorophosphate, chloride, bis(trifluoromethylsulfonyl)imide and tetrafluoroborate.

In a further embodiment, the ionic liquid preferably comprises at least one amine or amino moiety. The presence of these moieties is considered to enhance CO₂ solubility in the ionic liquid.

Particularly preferred ionic liquids include amino-acid ionic liquids which are typically prepared by reacting an amino acid with a typical ionic liquid cation or anion, such as any of those described above. Any amino acid may be used, however it is preferable if the amino acid is selected from the group consisting of glycine ([Gly]⁻), alanine ([Ala]⁻), proline ([Pro]⁻), leucine ([Leu]⁻), phenylalanine([Phe]⁻), methionine([Met]⁻), serine([Ser]⁻), isoleucine([Ile]⁻), lysine([Lys]⁻), and threonine([Thr]⁻).

The most preferable amino acid ionic liquids are those which combine a tetrabutylphosphonium cation with an anion of glycine, alanine or proline.

The liquid absorbent further comprises at least one polyethylene glycol. The liquid absorbent may thus comprise a single polyethylene glycol or a mixture of two or more different polyethylene glycols. Preferably, the liquid absorbent contains only a single polyethylene glycol.

By the term "polyethylene glycol" (PEG) we mean any polymer containing mostly ethylene oxide repeating units, i.e. -CH₂-CH₂-O- units. It should be noted, therefore, that the term "polyethylene glycol" within the context of the invention covers polyethylene glycol ethers. Typical polyethylene glycols have a molecular mass less than 20000 g/mol, preferably less than 10000 g/mol. It is preferable if the at least one PEG is a liquid under the process conditions of the process of the invention.

PEGs have some very competitive properties with respect to ILs, such as very low vapour pressure, being biodegradable, nontoxic and inexpensive, and chemically and thermally stable. In addition, PEGs are inexpensive and less viscous than ILs. The properties of PEGs could be tuned by varying the molecular weights. As polar solvents, PEGs also have noticeable solubility to CO₂ and selectivities for CO₂ over other gases such as H₂, N₂ and CH₄

The at least one polyethylene glycol may be a homopolymer or a copolymer. The copolymers may be block copolymers or random copolymers. Example copolymers include poly(propylene glycol)-poly(ethylene glycol) block copolymers, polyalkylamine - polyethylene glycol block copolymers, lipid - polyethylene glycol block copolymers and polylysine - polyethylene glycol block copolymers.

Where the polyethylene glycol is a polyethylene glycol ether such as a polyethylene glycol dimethyl ether, examples include diethylene glycol monobutyl ether (DEGMBE), triethylene glycol monobutyl ether(TEGMBE, 307) and tetraethylene glycol dimethyl ether(TEGDME).

In all embodiments of the invention, it is particularly preferred if a polyethylene glycol homopolymer is used.

Preferably, the PEG has an average molecular weight of 100 to 1000 g/mol, more preferably 150 to 600 g/mol, even more preferably 180 to 500 g/mol. PEGs with molecular weights of 200, 300 or 400 g/mol are especially preferred, i.e. PEG200, PEG300 or PEG400.

The liquid absorbent will typically comprise 1 to 99 wt% of the at least one ionic liquid, preferably 10 to 80 wt%, more preferably 15 to 60 wt%, even more preferably 20 to 50 wt%, e.g. 30 wt%, relative to the total weight of the absorbent.

The liquid absorbent will typically comprises 1 to 99 wt% of the at least one PEG, preferably 20 to 90 wt%, more preferably 40 to 85 wt%, even more preferably 50 to 80 wt%, e.g. 70 wt%, relative to the total weight of the absorbent.

Preferably, the liquid absorbent has a low content of water, i.e. comprises less than 10 wt%, preferably less than 5 wt.%, more preferably less than 2 wt.% water, relative to the total amount of liquid absorbent. Most preferably, the liquid absorbent is free of water. The presence of water is undesirable at levels above this because water in the absorbent may cause corrosion. Moreover, water evaporating in the desorber may reduce the purity of the product gas (e.g. H₂S, NH₃ and/or CO₂), and could lead to the requirement for an extra step post-treatment to remove the water, for example, by adding a condenser. However, the presence of water reduces the viscosity of the solvent, for example, up to 50% at 303K. Moreover, the evaporation of a small amount of water may enhance the stripping rate of the desorbed gas.

### Process

The processes of the invention are used to separate at least one gas (e.g. at least one of CO₂, H₂S and/or NH₃) from a mixed gaseous feed stream. Whilst it is within the ambit of the invention for more than one gas, e.g. two, gases to be separated, for example simultaneous separation of CO₂ and H₂S, it is preferable if only one gas is separated. Particularly preferable gases which may be separated using the processes of the invention are CO₂, H₂S and/or NH₃.

In all embodiments, it is preferred if the process of the invention results in the capture of at least 80%, more preferably at least 85%, even more preferably at least 90%, such as at least 95%, e.g. at least 99% of the at least one gas (e.g. at least one of CO₂, H₂S and/or NH₃) present in the original gaseous feed stream.

After contact with the liquid absorbent the gaseous feed stream typically comprises less than 10 vol%, preferably less than 5 vol%, more preferably less than 2 vol%, such as less than 1 vol% of the at least one gas to be separated (e.g. at least one of CO₂, H₂S and/or NH₃) relative to the total amount of gas present.

### Description of Figures

**Figure 1****:** TGA curves of AAILs-PEG400 at constant temperatures
**Figure 2****:** Experimental density (p) of mixed solvents (30% AAIL+70% PEG400 in weight percentage) studied as a function of temperature at atmospheric pressure
**Figure 3****:** Experimental viscosity (*η*) of mixed solvents (30% AAIL+70% PEG400 in weight percentage) studied as a function of temperature at atmospheric pressure
**Figure 4****:** CO₂ capacity in mixed solvents (30% AAILs+70% PEG400 in weight percentage) at (333.15, 373.15 and 413.15) K.
**Figure 5****:** Comparison of CO₂ capacity in AAILs/ PEG mixed solvents, [BMIM][BF4] and DMPEG at 333.15K
**Figure 6****:** Solubility of H₂ in PEG400 and mixed solvents (30% AAILs+70% PEG400 in weight percentage).
**Figure 7****:** CO₂/H₂ selectivity at different partial pressure.
**Figure 8** Solubility of CH₄ in PEG400 and mixed solvents (30% AAILs+70% PEG400 in weight percentage) at 333.15K
**Figure 9** Comparison of solubility of CO₂ and CH₄ in mixed solvents (30% [P4444][Pro]+70% PEG400 in weight percentage) at 333.15K

### Examples

### Materials

Polyethylene glycol 200 (PEG200, with an average molecular weight of 200), polyethylene glycol 300 (PEG300, with an average molecular weight of 300), polyethylene glycol 400 (PEG400, with an average molecular weight of 400), tetrabutylphosphonium hydroxide [P4444][OH] (40% by mass aqueous solution), glycine (Gly, 99%), alanine (Ala, 98%) and proline (Pro, 99%) were obtained from Sigma Aldrich. Hydrogen (H₂), methane (CH₄) and carbon dioxide (CO₂) with purity of 99.999% were supplied by Praxair. All materials were used as received without further treatment.

### Synthesis of amino-acid ionic liquids (AAILs)

The [P4444]⁺ based AAILs were prepared according to previously reported methods.( J. Am. Chem. Soc., 2005, 127, 2398-2399). The [P4444][OH] aqueous solution was added drop-wise to a slightly excess equimolar amino acid aqueous solution. The mixture was stirred at room temperature for 12 h, then water was evaporated at 318 K. To this reaction mixture was added as a mixed solvent (9:1 v/v) of acetonitrile and methanol, which was then stirred vigorously. The mixture was then filtered to remove any excess amino acid. Filtrate was evaporated to remove solvents. The product was dried in a vacuum for 2 days at 343 K to reduce the water content and volatile compounds to undetectable values prior to their use. The purity of each AAIL was checked using ¹H NMR spectra which were recorded on a Bruker Avance DPX 400 MHz NMR spectrometer, using dimethyl sulfoxide as the solvent. The water content of these ILs was determined by a Karl Fisher titration and was found to be less than 0.2 wt%.

### Apparatus and procedures

The thermal stability of PEGs, ILs and their mixtures were investigated using Perkin Elmer (Pyris 1) instrument according to the thermal gravimetrical analysis (TGA) method. A known amount of sample (12 to 16 mg) in N₂ (60 mL/min) atmosphere was initiated at 298 K, followed by a temperature increase to 800 K at a heating rate of 10.0 K /min.

The density and viscosity of all solvents were determined using Anton Paar DMA 4500M apparatus and the rheometer (Physica MCR 100), respectively.

The vapor-liquid equilibrium (or solubility) is measured using the standard pressure decay method.

### Thermal stability

Thermal gravimetric results of pure PEGs and AAILs shows that the thermal stability of pure solvents is in the order of: PEG400> AAILs> PEG300 > PEG200. The onset temperature (*Tₒₙₛₑₜ,* defined as the intersection of the baseline weight and the tangent line derived from the dropping curve) was employed to indicate the temperature where weight loss begins on the TGA, as listed in Table 1.

**Table 1**

| | *M*/*g*·mol⁻¹ | *Tₒₙₛₑₜ*/*K* | *η*/mPa·s* |
|---|---|---|---|
| PEG200 | ∼200 | 461 | 38.7(at 303 K) |
| PEG300 | ∼300 | 500 | - |
| PEG400 | ∼400 | 566 | 69.6(at 303 K) |
| [P4444][Gly] | 333.5 | 535 | 415 (at 298 K) |
| [P4444][Ala] | 347.5 | 530 | 344 (at 298 K) |
| [P4444][Pro] | 373.6 | 536 | 851 (at 298 K) |

| | | | |
|---|---|---|---|
| * Ref: Chem Commun., 2006, 2254-2256 & J Phy. Chem. B, 2011, 115, 7405-7416 | | | |

The weight loss can be attributed to total evaporation or decomposition of the sample. The *Tₒₙₛₑₜ* of PEG200, PEG300 and PEG400 are around 461 K, 500 K and 566 K, respectively. Hence, PEGs with higher molecular weights showed better thermal stability, but also higher viscosity, as can be seen in Table 1. Although there are some differences in *Tₒₙₛₑₜ,* it suggests that both PEG400 and AAILs have good thermal stability above 530 K.

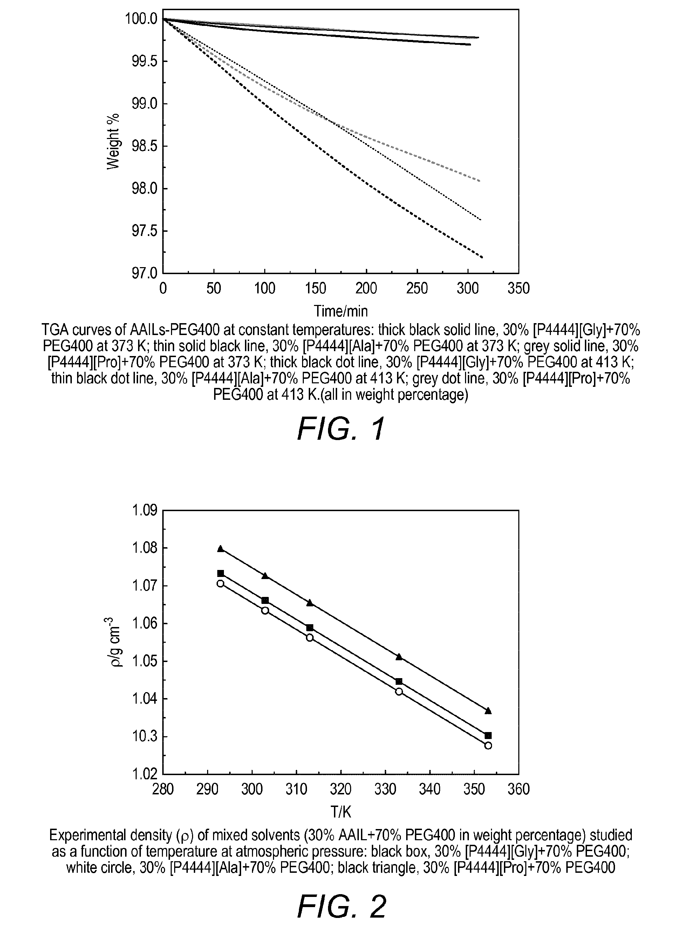

The long-term thermal performances were analyzed at 373 K and 413 K for 300 min in N₂ (60 mL/min), as illustrated in Figure 1. All AAILs-PEG400 mixtures consisted of 30 wt% AAILs and 70 wt% PEG400 with an uncertainty of 0.1wt%. At 373 K, the weight loss percentages for [P4444][Gly]-PEG400, [P4444][Ala]-PEG400, [P4444][Pro]-PEG400 are 0.29%, 0.24% and 0.24%, respectively, much more stable than foralkanolamine-PEG200 at 353 K, in which the weight loss percentages were recorded as varying between 8% and 26% in N₂ (20 ml/min). When the temperature increased to 413 K, the weight loss percentages for [P4444][Gly]-PEG400, [P4444][Ala]-PEG400, [P4444][Pro]-PEG400 increased to 2.72%, 2.28% and 1.92%, respectively, which is still much more stable than the reported amine-containing solvent at lower temperatures.

### Density

Density measurements of mixed solvents AAILs-PEG400 were carried out at temperatures ranging from (293.15 to 353.15) K at 0.1 Mpa.
Figure 2 illustrates the variation of the density with temperature for the mixed solvents. As can be seen, the density of all solvents decreases as temperature increases, and the density of mixed solvents decreased in the following [P4444][Pro]-PEG400> [P4444][Gly]-PEG400> [P4444][Ala]-PEG400, which is consistent with the density order of pure AAILs reported in the literature.

### Viscosity

High viscosity is a major drawback in the application of AAILs in CO₂ absorption processes. Viscosity significantly influences the mass transfer and hence process efficiency. Therefore, low viscosity is one of the most important requirements for the solvent developed in this study.

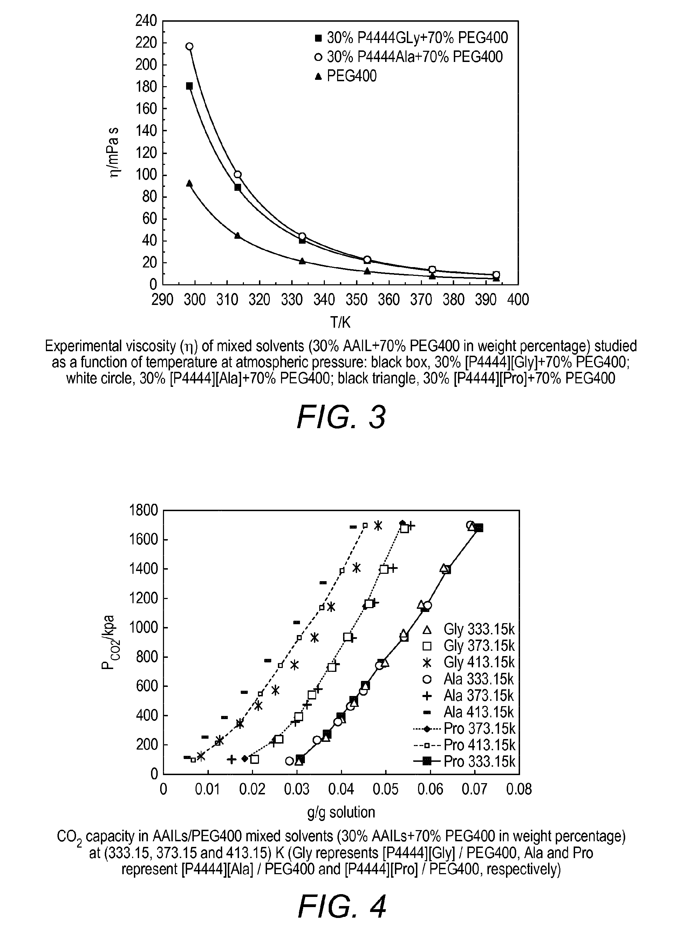

The viscosities of mixed solvents AAILs-PEG400 and pure PEG400 were determined at temperatures ranging from 298.15 K to 393.15 K at 0.1 MPa, as shown in Figure 3. At 298.15 K, the viscosity of mixed AAILs-PEG400 is about half the viscosity of pure AAILs (as shown in Table 1) due to the relatively low viscosity of PEG400. When the temperature increases to 333.15 K, the viscosity shows a dramatically decrease. For example, the viscosity of [P4444][Ala]-PEG400 decreases from (216.64 to 44.52) mPa·s as temperature increased from (293.15 to 333.15) K. The viscosity decreases to about 10 mPa·s as the temperature increases to 393 K. In addition, the viscosity decreases up to 50% with the presence of 2% water at 303.15K.

### Solubility of CO₂ in AAILs-PEG400 mixed solvents

The equilibrium solubility for CO₂ in mixtures of PEG400 with [P4444][Gly], [P4444][Ala] and [P4444][Pro] at (333.15, 373.15 and 413.15) K within a range of CO₂ partial pressure of 100-1700 kPa is shown in Figure 4. CO₂ capacity (g CO₂/g total solution) was used to present CO₂ solubility in mixed solvents of AAILs-PEG400 at different temperatures and pressures. As can be seen, at 333.15 K and CO₂ partial pressure at 1700 kPa, [P4444][Pro]-PEG400 mixed solvent is able to absorb around 0.068g CO₂ per gram of solvent. By reducing the pressure to 100 kPa, CO₂ capacity decreases to 0.03 g CO₂/ g solution. As a result, the cyclic CO₂ capacity reaches 0.038 g CO2/ g solution, which means that the AAIL-PEG400 solution can use a pressure swing method to regenerate the absorbent. Moreover, if increasing temperature to 413.15 K at the same time, CO₂ capacity decreases to 0.005 g CO₂/ g solution, and then the cyclic CO₂ capacity reaches 0.063 g CO₂/ g solution, which means that a combined pressure and temperature swing method can be even more efficient for solvent regeneration.

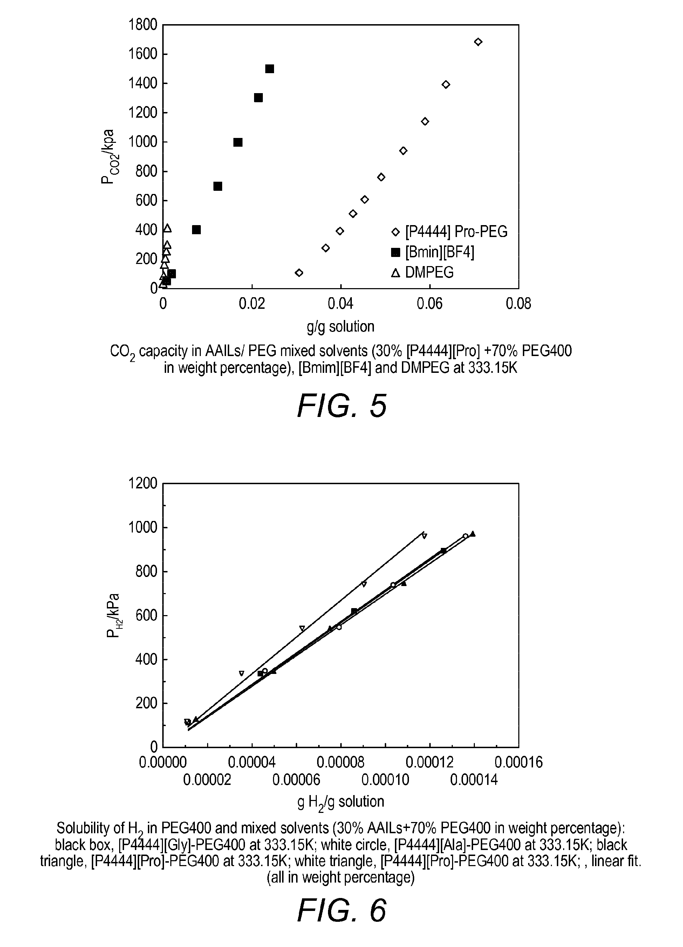

The CO₂ capacity of [Bmim][BF4] and poly(ethylene glycol) dimethyl ether (DMPEG) at temperature 333.15K are also shown in Figure 5 for comparison. The CO₂ capacity of [Bmim][BF4] shows around one third of that of AAIL-PEG400 mixed solvent at the same CO₂ partial pressure, while DMPEG shows even lower CO₂ capacity, suggesting that DMPEG (Selexol) is not competitive to the current invention for CO₂ separation at elevated temperatures.

The reaction schematics of CO₂ with AAILs (AAILs-carbamates are formed after CO₂ sorption) is confirmed by the formation of very small AAILs-carbamate salt particles during the experiments. These particles are insoluble with PEG400 below 373.15 K. At the beginning of absorption, these particles are well dispersed in PEG400 solution. After standing still for several hours, two phases appeared. However, these two phases can be easily mixed to be a well-dispersed solvent again simply by stirring, as the particle is compatible in PEG400 and their size is very small. SEM images show that almost all formed particles have similar size of approximately 4 µm. In general, pure AAILs become hard solid after absorbing CO₂, which impedes their application in many industrial processes. The application of PEG400 as co-solvent can solve this problem and make more applications possible. It should be noted that particles were formed at 333.15 K and 373.15 K for [P4444][Gly] or [P4444][Ala] based mixed solution. When temperature increased to 413.15 K, no particles can be found in the solutions. For [P4444][Pro] based solution, the particle was only formed at 333.15 K.

### CO₂/H₂ selectivity

The solubility of H₂ in AAILs-PEG400 is much lower than that of CO₂ in this mixed solvent. The AAILs-PEG400 mixed solvent is believed to be a physical solvent towards H₂, which leads to an extremely low solubility, especially at high temperatures. Hence, the equilibrium solubility of H₂ in mixtures of PEG400 with [P4444][Gly], [P4444][Ala] and [P4444][Pro] was measured only at 333.15 K within a H₂ partial pressure range of 100-1000 kPa.

Figure 6 presents the solubility of H₂ in the mixed solvents based on H₂ capacity (g H₂/g total solution). In terms of the overall solubility performance of AAILs-PEG400, there is a very small difference in solubility among these three AAIL-PEG400 absorbents. In addition, it can be found that the solubility of H₂ in co-solvent PEG400 is lower than that of the mixed solvents. It is therefore reasonable to assume that AAILs have a higher H₂ solubility than PEG400, and the addition of PEG400 as co-solvent increases the CO₂/H₂ selectivity.

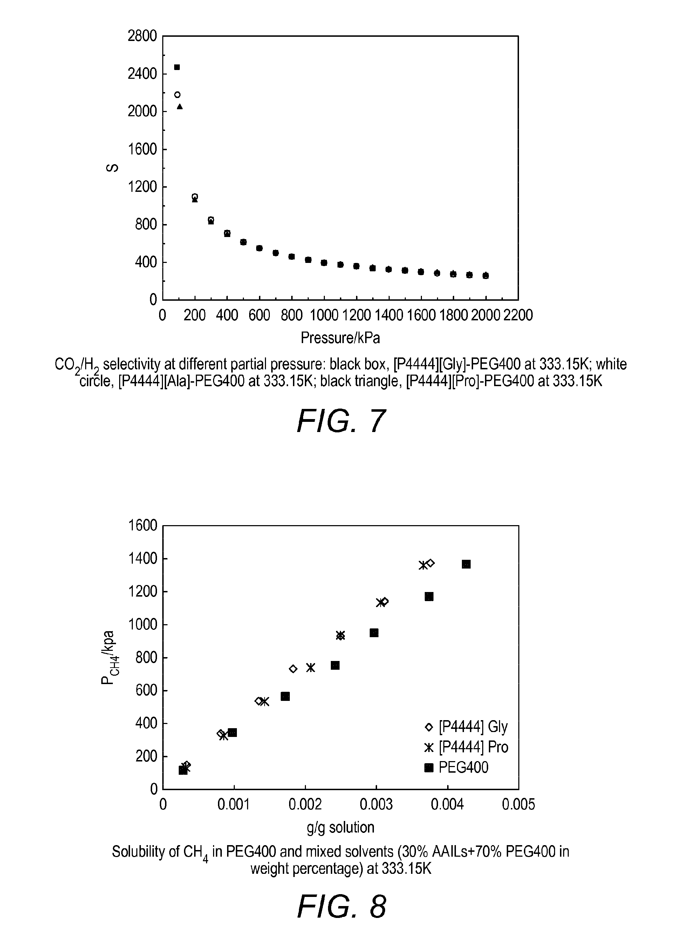

Figure 7 demonstrates the ideal CO₂/H₂ selectivity (S) at different partial pressures. With the increase of partial pressure from around 100 kPa to 2000 kPa, *S* shows a dramatically decrease from *ca* 2600 to 300. The high selectivity towards CO₂ at low pressure was resulted from the high CO₂ solubility due to chemisorption. However, when physisorption domains the absorption process at high pressures when the reactive sites in AAILs are saturated, the solubility gap between CO₂ and H₂ is narrowed, which leads to a decreasing of S.

### CO₂/CH₄ selectivity

The solubility of CH₄ in the AAIL-PEG solvent is shown in Figure 8. The CH₄ solubility in the AAILs-PEG400 mixed solvents shows nearly no difference, while the solubility of CH₄ in PEG400 is higher than that of the mixed solvents.

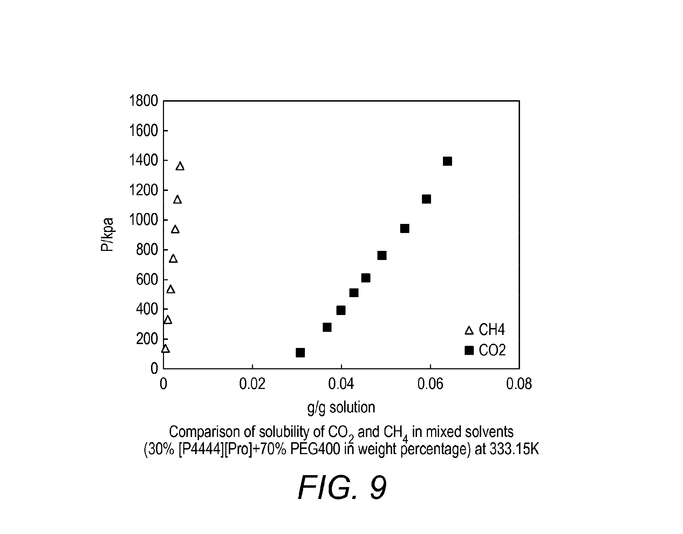

Figure 9 gives a comparison of solubility of CO₂ and CH₄ in mixed solvents [P4444]Pro-PEG400 at 333.15K. The solubility difference of CO₂ and CH₄ is large. However, the ideal CO₂/CH₄ selectivity is only around 100, and it has a dramatically decrease from *ca* 100 to 20 with the increase of partial pressure from around 150 kPa to 1500 kPa.

## Claims

1. A process for separating at least one gas (e.g. at least one of CO₂, H₂S and/or NH₃) from a mixed gaseous feed stream, said process comprising contacting said mixed gaseous feed stream with a liquid absorbent, said liquid absorbent comprising at least one ionic liquid and at least one polyethylene glycol.

2. The process as claimed in claim 1, wherein said gaseous feed stream comprises CO₂ and H₂ and wherein said at least one gas is CO₂; or
wherein said gaseous feed stream comprises CO₂ and CH₄ and wherein said at least one gas is CO₂; or
wherein said gaseous feed stream comprises CO₂ and N₂ and wherein said at least one gas is CO₂.

3. The process of claims 1 or 2, wherein said gaseous feed stream comprises 5 to 90 vol% CO₂, relative to the total amount of gas.

4. The process as claimed in claim 1, wherein said gaseous feed stream comprises H₂S, CO₂ and CH₄ and wherein said at least one gas is H₂S and CO₂.

5. The process as claimed in claim 1, wherein said gaseous feed stream comprises NH₃ and H₂ and wherein said at least one gas is NH₃.

6. The process of claim 1 or 5 wherein said gaseous feed stream comprises 0.5 to 55 vol% NH₃ relative to the total amount of gas.

7. The process of any of claims 1 to 6, wherein the liquid absorbent comprises 1 to 99 wt%, preferably 10 to 80 wt%, more preferably 15 to 60 wt%, even more preferably 20 to 50 wt%, e.g. 30 wt% of the at least one ionic liquid, relative to the total weight of the absorbent.

8. The process of any of claims 1 to 7, wherein the liquid absorbent comprises 1 to 99 wt% , preferably 20 to 90 wt%, more preferably 40 to 85 wt%, even more preferably 50 to 80 wt%, e.g. 70 wt%, of the at least one PEG, relative to the total weight of the absorbent.

9. The process of any of claims 1 to 8, wherein the at least one polyethylene glycol (PEG) is selected from PEG 200, PEG 300 or PEG 400, or wherein the at least one polyethylene glycol is a polyethylene glycol ether.

10. The process of any of claims 1 to 9, wherein the at least one ionic liquid is an amino acid ionic liquid.

11. The process of any of claims 1 to 10, wherein the at least one ionic liquid comprises a tetrabutylphosphium cation and an anion selected from the group consisting of lycine, alanine or proline.

12. The process of any of claims 1 to 10, wherein the at least one ionic liquid comprises an imidazolium cation.

13. The process of any of claims 1 to 9 or 12, wherein the at least one ionic liquid comprises an imidazolium cation and an anion selected from the group consisting of hexafluorophosphate, chloride, tetrafluoroborate and bis(trifluoromethylsulfonyl)imide.

14. The process of any of claims 1 to 13, wherein said gaseous feed stream and said liquid absorbent are contacted in an absorption column or a membrane contactor.

15. The use of a liquid absorbent comprising at least one ionic liquid and at least one polyethylene glycol as defined in any preceding claim for absorbing at least one gas (e.g. at least one of CO₂, H₂S and/or NH₃) from a mixed gaseous feed stream.
